# EUROPEAN PATENT SPECIFICATION

(11) **EP 1 749 431 B1**
(45) Date of publication and mention of the grant of the patent: **23.07.2008**
(21) Application number: 06118276.2
(22) Date of filing: 01.08.2006
(51) Int. Cl.: A01D 34/71, A01D 34/81

(54) **Improvements in or relating to vegetation cutter apparatus**
Verbesserungen bezüglich eines Scneidapparates für Vegetation
Améloriations relatives à un dispositif de coupe de végétaux

(30) Priority: 03.08.2005 GB 0515960
(43) Date of publication of application: 07.02.2007
(73) Proprietor: ROBERT BOSCH GMBH, 70469 Stuttgart (DE)
(72) Inventor: Quigley, Andrew, Stowmarket, Suffolk IP14 1EY (GB); Coussins, Adrian, Stowmarket, Suffolk IP14 1EY (GB)
(74) Representative: Bailey, David Martin

(56) References cited:
- EP-A- 1 692 930
- WO-A-03/065791
- GB-A- 946 537
- GB-A- 2 024 591
- US-A- 4 631 909

## Description

The present invention relates to improvements in or relating to a ground working apparatus. In particular, it relates to improvements in the construction and manufacture of housings for ground working apparatus involving the ejection of debris, especially lawn mowers, scarifiers and verticutters.

Apparatus for this type, such as lawn mowers are complex products typically assembled from a plurality of injection moulded plastics components. Central amongst these components is the deck. The deck provides the mounting for most of the components of the mower, in particular for the prime mover for the apparatus, typically an electric motor or a small petrol engine. In the context of a rotary electric lawn mower, the electric motor is mounted on an upper surface of the deck. Some lawn mowers have a direct drive mechanism, in which case, the drive shaft of the motor passes though an aperture in the deck. An elongate cutting blade is mounted on the end of the drive shaft, within a bowl-shaped cavity formed on the underside of the deck. In indirect-drive mechanisms, the blade is mounted on a shaft of a pulley which is driven by means of a belt passing over the drive shaft of the motor. Numerous alternative drive arrangements are known, each of which has to be accommodated in a deck moulding. The deck further comprises mounting points for a cover for the motor and typically also includes mounting points for a handle, front and rear wheels or front wheels and a rear roller.

Most lawn mowers are designed to collect the grass cuttings produced by the cutter and include a demountable grass box or bag carried generally behind the deck. The grass box and bowl are in communication by means of a channel or chute therebetween formed as part of the deck construction.

As the grass box or bag is demountable for emptying, a spring-loaded closure must be provided over the outlet of the chute to provide protection to the user and to prevent access to the blade through the chute in the event that the mower is operated without the grass box in place, for example, when it is intended to leave the grass cuttings on a lawn to provide a mulch. Typically, the closure is formed as a deflector guard or flap, mountable on an upper surface of the deck or another component.

Typically, manufacturers of lawn mowers make their products available in a range of cutting widths and configurations of motors or engines, handles, wheels and rollers etc. To minimise production costs, it is common to seek to base the range of different configurations on a common chassis design. Accordingly, a single deck is moulded to provide mounting points for all the components of a wide range of configurations for each particular cutting width. For example, a single deck may be required to have three sets of mountings at the rear end thereof for a roller variant, a simple twin-wheeled axle variant and a variant in which rear wheels are mounted in such a way as to provide an adjustable height of cut arrangement, such as that disclosed in our earlier UK patent application GB 2367475. The front of the deck may also include two or more sets of wheel mountings, for fixed and adjustable height of cut variants.

Accordingly, the deck mouldings are complicated and difficult to mould, particularly as regards non-vertical apertures such as the grass chute and wheel mountings. Known methods of moulding include moulding the deck of the machine with a large 'moving core' on the mould tool. That is to say, in addition to the simple upper and lower mould halves, the mould includes tool components which have to be moved into a moulding position once the two principal halves have been brought together. This allows, for example, the grass exit chute (including its floor and roof) to be formed as part of the one moulding. However, the increased tool complexity of such solutions results in longer mould cycle times as each moving core tool must be retracted before the mould halves can be opened and hence leads to increased cost. It is also inevitable that the mouldings themselves will not readily 'stack' and hence only a small number of mouldings can be stored in a given space. This gives rise to increased storage and transport costs. The tool construction also places limitations on the shape of the floor which in turn compromises the grass collection performance.

An alternative process is to mould the deck as a 'simple opening tool' (with simple upper and lower mould parts) and then provide separate components to form the complex features such as the roof of the exit chute and also provide the deflector guard pivot point. This solution brings increased complexity of extra tools and so additional cost, as well as additional components, fastenings etc and hence is also undesirable.

Accordingly, the present invention seeks to provide an alternative method for the construction of a lawnmower chassis.

In its broadest sense, the present invention provides a ground working apparatus having a deck having a lower surface defining a working chamber, a working element mounted within the working chamber, a prime mover assembly driving the working element, the prime mover being mounted on an upper surface of the deck, wherein the ground working apparatus further comprises a discharge chute having a discharge chute inlet in communication with the working chamber and a discharge chute outlet, a cover covering at least a portion of the prime mover assembly, and a pivotable deflector guard biased into a closed configuration against the discharge chute outlet. The discharge chute comprises a chute floor, chute sides and a chute roof. The present invention is characterised in that at least a portion of the chute roof is formed by a portion of the prime mover cover.

Preferably, the cover is injection-moulded from a plastics material.

Preferably, the cover comprises first and second cover elements. Preferably, the first and second cover elements are moulded together with a live hinge formed therebetween. In this context, the term 'live hinge' will be understood as indicating a thin web of plastics material joining the first and second cover elements and allowing the components to be flexed with respect to each other in the manner of a hinge.

Preferably, lower surfaces of the first and second cover elements include respective retaining means such that upon flexation of the live hinge the second cover element is retained within a portion of a lower surface of the first cover element. By this means, an upper surface of the second cover element forms that part of the roof of the discharge chute formed by the prime mover cover.

Preferably, the cover includes deflector guard retaining means. More preferably, the deflector guard comprises a deflector guard panel including pivot means cooperable with said deflector guard retaining means. Suitably, the pivot means comprises a pair of outwards extending pins adapted to engage and be retained by corresponding mounts formed in the cover. Suitably, the mounts are each formed by respective half-mounts formed in the lower surfaces of the first and second cover elements.

The above and other aspects of the present invention will now be discussed in further detail with reference to the accompanying drawings in which:
Figure 1 is a perspective view of an embodiment of a ground working apparatus in accordance with the present invention in the form of an electric motor-powered lawnmower;
Figure 2 is a perspective view of the deck of the lawnmower of Figure 1;
Figure 3 is a plan view of the deck of Figure 2;
Figure 4 is a rear view of the deck of Figure 2;
Figure 5 is a top plan view of the motor cover of the lawnmower of Figure 1 in an unassembled configuration;
Figure 6 is a bottom plan view of the motor cover of Figure 5;
Figures 7 to 15 show a sequence of views showing the assembly of the motor cover of Figure 5 with a deflector guard; and
Figure 16 is a part cross-sectional view of the lawn mower of Figure 1.

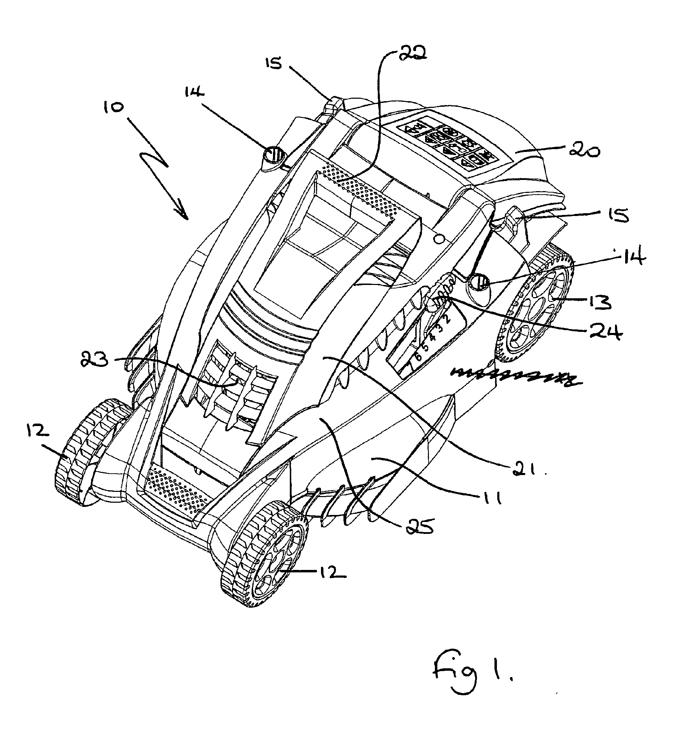

Figure 1 is a perspective view of the body 10 of a lawnmower in accordance with the present invention with the conventional handles and grass collection box or bag omitted for clarity. The lawnmower illustrated is of the type known as a 'rotary mower' in which an electric motor rotates a cutting blade about a vertical axis, either by a direct drive action in which the blade is mounted on the motor spindle or an indirect drive mechanism in which the motor drives a belt which, in turn, drives a pulley on which is mounted the cutting blade. The body 10 includes a deck 11 of the type described above, upon which most of the functional features of the lawnmower are mounted, such as the motor. For example, the deck 11 includes a front (in use) axle-mounting (obscured) which carries an axle upon which a pair of front wheels 12 are mounted. Similarly, at the rear of lawnmower is a pair of rear wheels 13 mounted on a rear axle carried by a rear axle mounting (obscured).

The left and right sides of the deck 11 (as viewed from the front of the lawnmower) each include a pocket 14 into which respective arms of a handle assembly are mounted and a respective grass box support mount 15 by which the grass box is, in use, supported adjacent an outlet from the cutting bowl of the mower. The deck 11 includes a cutting bowl on the underside thereof in which is mounted the cutting blade. A grass discharge chute communicates at an inlet end with the cutting bowl and forms an outlet end in a rear surface of the lawnmower against which outlet, in use, an inlet for the grass box is supported.

A deflector guard 20 is biased by means of a spring (not shown) against the grass discharge chute outlet. A deck cover 25 is provided to improve the aesthetics of the lawnmower. A motor cover 21 is mounted on an upper surface of deck 11. In the embodiment shown, the motor cover 21 includes a handle 22 to aid lifting of the lawnmower. The motor cover also includes air inlets 23 to provide a flow of cooling air over the motor in use. The lawnmower illustrated also includes a height of cut adjustment arrangement of the type described in our earlier patent application GB 2367475 working on wheels 12,13 through a operating lever 24.

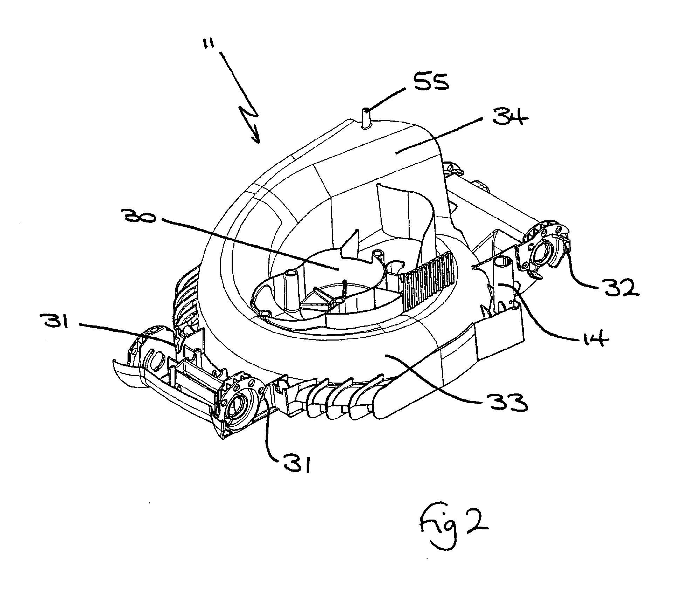

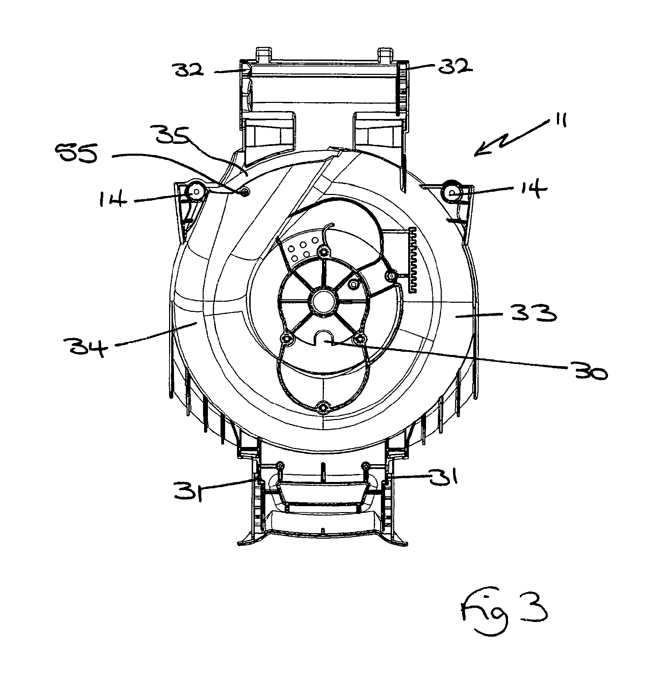

Figures 2 to 4 show the deck 11 alone. The deck includes a motor housing 30, front and rear wheel mountings 31,32. The deck 11 also forms the cutting bowl 33, the upper surface of which is visible in this view, and the grass discharge chute 34 through which grass entrained in a flow of air generated by the rotating blade is ejected from the bowl to an outlet 35 towards the rear of the deck 11. As is conventional, preferably the flow of air generated by the rotating blade is enhanced by means of an impeller or fan mounted coaxially with the blade on the motor drive shaft.

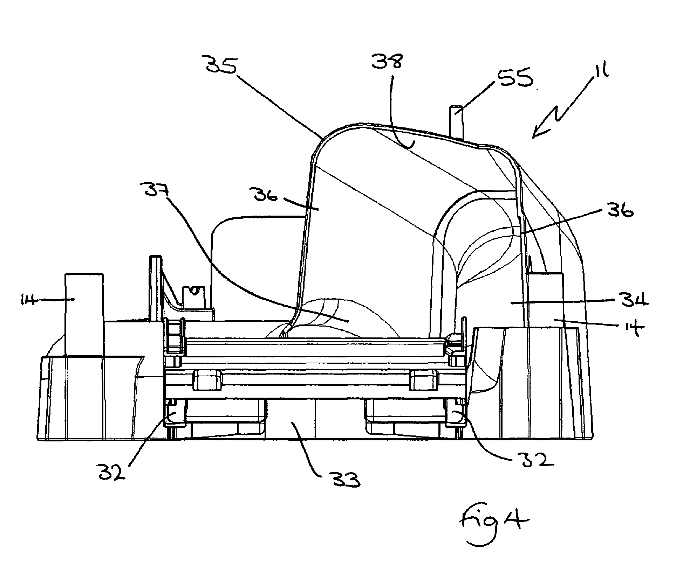

Grass discharge chute 34 of deck 11 is formed with side walls 36, a chute floor 37 and a chute roof 38 (Figure 4). As described above in the introduction, the present invention enables the deck to be formed with only a partial chute roof 38, avoiding the need for complex tooling. In accordance with the present invention, the 'missing' portion of the chute roof is formed by at least a portion of the motor cover 21 as hereinafter described. In alternative embodiments, the chute floor 37 or a part thereof, particularly a rearward part, is formed as a part of deck cover 25.

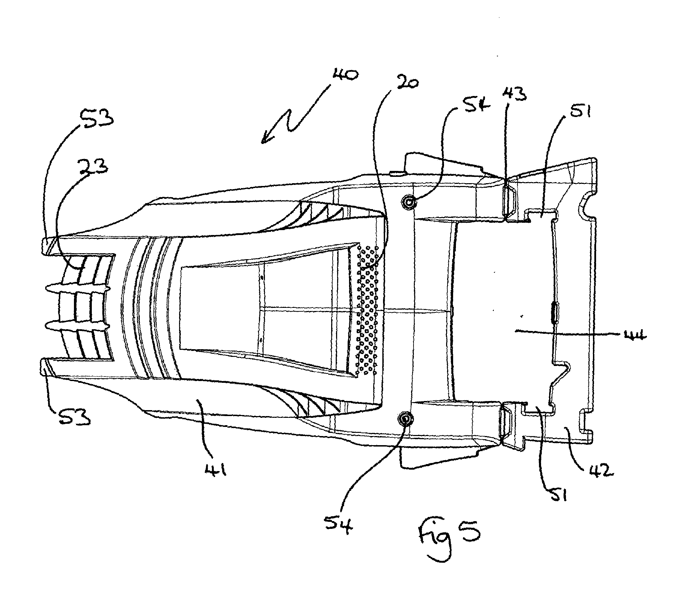

Figure 5 is a plan view of the motor cover 21 moulding 40. The moulding 40 includes a first or major cover element 41 forming the bulk of the cover and having most of the features of the cover, such as the handle 22 and air inlet 23, and a second or minor cover element 42. The upper surface of major cover element 41 is defined by the required aesthetic appearance of the whole mower. Major and minor cover elements 41,42 are typically moulded from a plastics material and a typically moulded as a unitary component, with the two elements 41,42 joined together by a thin web of plastics material 43 forming a live hinge. An aperture 44 is formed between the major and minor cover elements.

To form the motor cover 21, major and minor cover elements 41,42 are folded along the live hinge 43 and the underside of minor cover element 42 is held in place against the underside of major cover element 41 by suitable retaining means. In the embodiment shown, the retaining means comprise mating male 45 and female 46 moulded components of the type well known in construction and assembling of plastic injection moulded components.

In an alternative embodiment, the major and minor cover element components are separate injection moulded components.

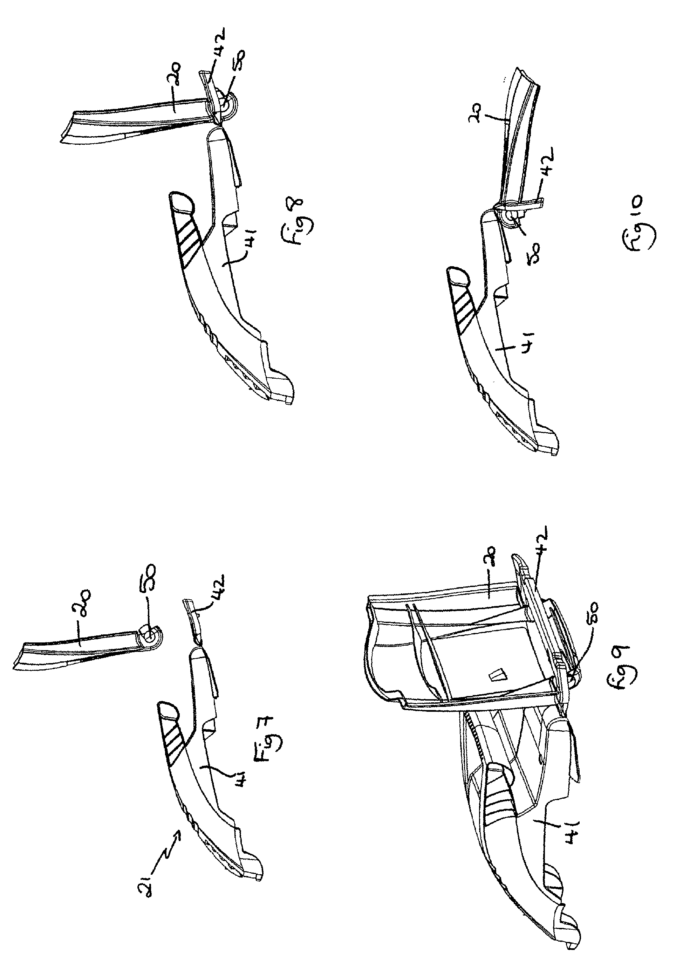

In the lawn mower of the present invention, the deflector guard 20 is pivotally mounted to the motor cover 21 and is held in place as the major and minor motor cover elements 41,42 are brought together as described above. This will now be described in more detail with reference to Figures 7 to 14.

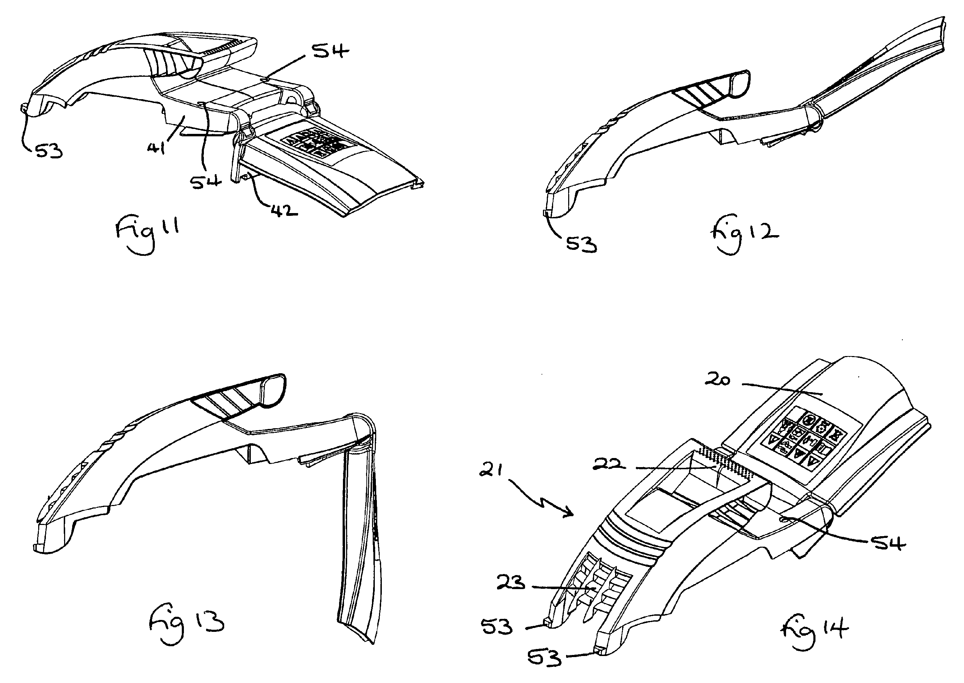

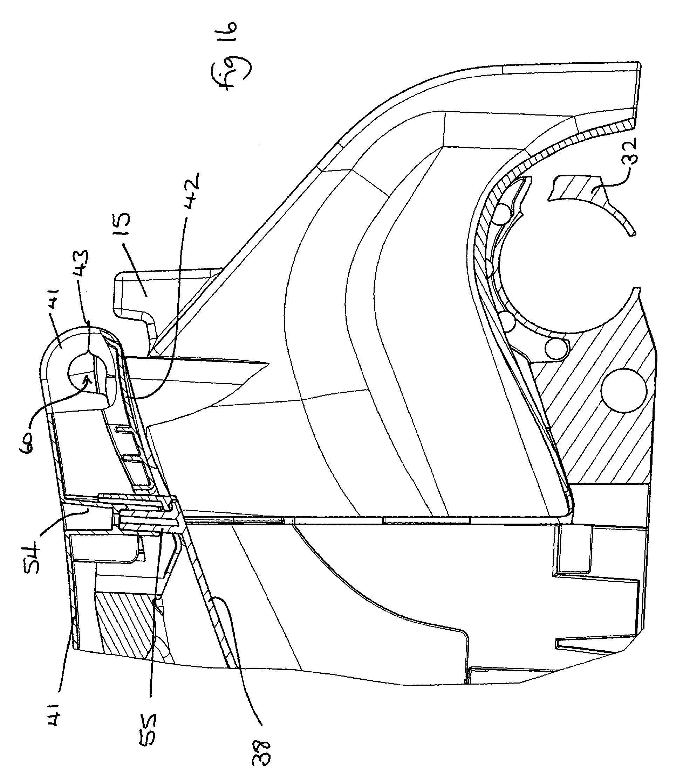

Deflector guard 20 has a generally square or rectangular shape (as may be seen in Figures 9 and 14). At each side adjacent an operatively upper edge is formed a respective pivot pin 50. Corresponding pivot pin half-mounts are provided in each of the major and minor cover elements 41,42 which together form a pivot pin mount 60 (Figure 16) when the two cover elements are brought together.

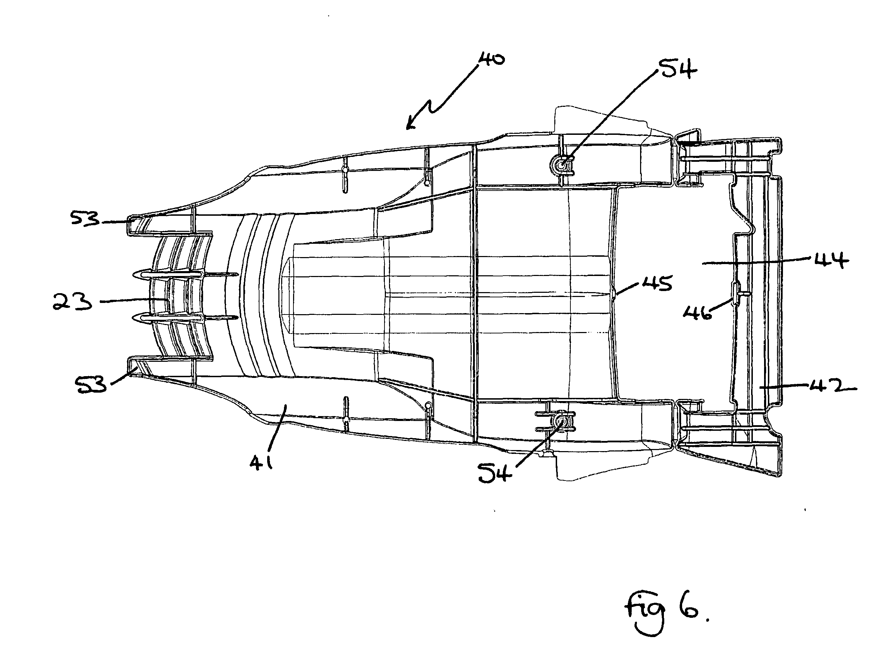

As shown in Figure 7, in assembling the motor cover 21, deflector guard 20 is introduced from above and the pivot pins 50 are allowed to pass through the aperture 44 by means of enlarged pivot pin openings 51 formed in a portion of the motor cover (in the minor cover element in the embodiment shown ― see Figures 5 and 6). This configuration is shown in Figures 8 and 9. Minor cover element 42 is then pivoted about live hinge 43 along with deflector guard 20 (Figures 10 and 11). Minor cover element 42 is then closed completely against the underside of major cover element 41 (Figure 12), securing deflector guard 20 in place between the two pivot pin mounts as described above. Deflector guard 20 is then free to pivot as shown in Figures 12 to 14.

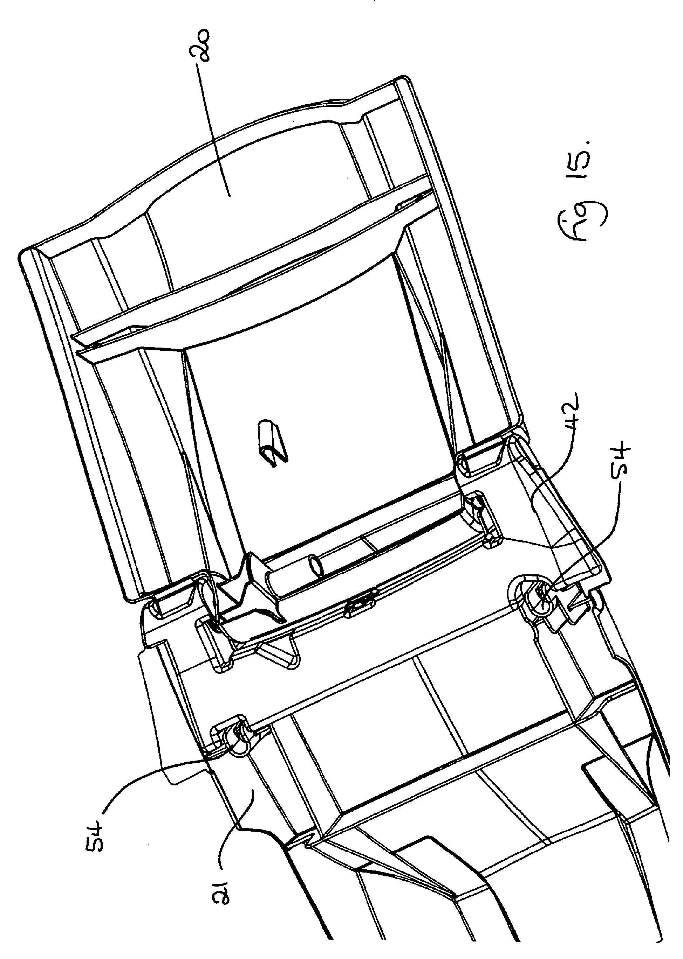

An underside view of the assembled motor cover 21 with deflector guard 20 is shown in Figure 15. A torsion spring (not shown) is provided to bias the deflector guard 20 into a folded or closed configuration against the motor cover 21 and thus, in use, into a closed configuration against the outlet 35 of the grass discharge chute 34.

Motor cover 21 is mountable on an upper surface of deck cover 25 by any suitable means or combination of means, including, in the embodiment shown, inter-engaging male 53 and female mouldings formed in the respective components and screws passing through screw mountings 54 provided on the motor cover, the screws then being received in respective screw fixtures 55 provided on the deck or the deck cover as convenient.

As is most clearly shown in this figure, the minor cover element 42 presents a flat portion to the surface to the underside of motor cover 21. As such, when the motor cover 21 is secured in position above the deck 11 and deck cover 25 (Figure 16), a portion of the flat surface sits above that portion of the outlet 35 of the grass discharge chute 34 which has been moulded without a complete roof, and thus provides a smooth and continuous extension to the roof element moulded as part of deck 11 so as not to impede the flow of grass cuttings through the chute and into the grass collection box or bag. Equally, as shown in Figures 1 and 16, whatever aesthetically pleasing, continuous, external upper surface to the lawnmower is desired can be achieved by the use of the motor cover of the present invention.

By the methodology of the present invention, it is possible to mould the main deck mouldings as simple opening tools, meaning that the element of the roof of the chute which is integral with deck 11 extends only as far as the start of the chute floor, whether this is integral with deck 11 or formed as part of deck cover 25. The need for complex moving core tool components is avoided. This simplifies the moulding procedure resulting in quicker moulding times and thus reduced costs. Typically, products moulded using simple opening tools can be stacked on top of each other more closely than can products moulded using more complex tools. This is advantageous in terms of transportation as a greater number of deck mouldings can be transported for a particular volume and therefore the transport costs per product are reduced. The inclusion of a portion of the operative roof of the grass discharge chute integrally with the motor cover, together with the motor cover providing the pivot mounting for the deflector guard means that neither the grass collection performance nor the exterior appearance of the product is compromised, but the individual components can be tooled, moulded and transported a lower cost.

## Claims

1. A vegetation cutting apparatus having a deck (11) having a lower surface defining a cutting chamber (33), a cutting element mounted within the cutting chamber (33), a prime mover assembly driving the cutter element, the prime mover being mounted on an upper surface of the deck (11), wherein the vegetation cutting apparatus further comprises a discharge chute (34) having a discharge chute inlet in communication with the cutting chamber (33) and a discharge chute outlet (35), a cover (21) covering at least a portion of the prime mover assembly, and a pivotable deflector guard (20) biased into a closed configuration against the discharge chute outlet (35) and wherein the discharge chute (34) comprises a chute floor (37), chute sides (36) and a chute roof (38); **characterised in that** at least a portion of the chute roof (38) is formed by a portion of the prime mover cover (21).

2. A vegetation apparatus as claimed in Claim 1 wherein the prime mover cover (21) is injection moulded from a plastics material.

3. A vegetation apparatus as claimed in Claim 2 wherein the cover comprises first and second cover elements (41,42).

4. A vegetation apparatus as claimed in Claim 3 wherein the first and second cover elements (41,42) are moulded as a unitary component with a live hinge (43) formed therebetween.

5. A vegetation apparatus as claimed in Claim 4 wherein an upper surface of the second cover element (42) forms that part of the roof (38) of the discharge chute (34) formed by the prime mover cover (21).

6. A vegetation apparatus as claimed in Claim 5 wherein lower surfaces of the first and second cover elements (41,42) include respective retaining means (45,46) such that upon flexation of the live hinge (43) the second cover element (42) is retained within a portion of a lower surface of the first cover element (41).

7. A vegetation apparatus as claimed in any one of claims 1 to 6 wherein the cover (21) includes deflector guard retaining means.

8. A vegetation apparatus as claimed in Claim 7 wherein the deflector guard (20) comprises a deflector guard panel including pivot means cooperable with said deflector guard retaining means.

9. A vegetation apparatus as claimed in Claim 8 wherein the pivot means comprises a pair of outwards extending pins (50) adapted to engage and be retained by corresponding mounts (51) formed in the cover.

10. A vegetation apparatus as claimed in Claim 9 wherein the mounts are each formed by a respective half-mounts formed in the lower surfaces of the first and second cover elements.

11. A vegetation apparatus as claimed in any preceding claim in the form of a lawnmower.

12. A vegetation apparatus as claimed in any preceding claim in which the prime mover is an electric motor.

13. A method for the manufacture of a vegetation cutter having a deck (11) defining a cutting chamber (33) and having a cutting element mounted within the cutting chamber (33), a prime mover assembly driving the cutter element, and wherein the prime mover is mounted on an upper surface of the deck (11), wherein the vegetation cutting apparatus further comprises a discharge chute (34) having a discharge chute inlet in communication with the cutting chamber (33) and a discharge chute outlet (35), a cover (21) covering at least a portion of the prime mover assembly, and a pivotable deflector guard (20) biased into a closed configuration against the discharge chute outlet (35) and wherein the discharge chute (34) comprises a chute floor (37), chute sides (36) and a chute roof (38); wherein said method comprises the steps of:
i) moulding the deck (11) with a simple opening mould, such that the chute roof (38) extends only as far as the start of the chute floor (37); and
ii) forming at least a portion of the chute roof (38) by a portion of the prime mover cover (21).

14. A method as claimed in claim 13 wherein the prime mover cover (21) is formed from first and second cover elements (41,42).

15. A method as claimed in Claim 14 wherein the first and second cover elements (41,42) are moulded as a unitary component with a live hinge (43) formed therebetween.

## Patentansprüche

1. Schneidapparat für Vegetation, der eine Plattform (11) aufweist, die eine untere Fläche aufweist, die eine Schneidkammer (33) definiert, ein in der Schneidkammer (33) angebrachtes Schneidelement, eine Antriebsanordnung, die das Schneidelement antreibt, wobei der Antrieb auf einer oberen Fläche der Plattform (11) angebracht ist, wobei der Schneidapparat für Vegetation außerdem eine Austragrutsche (34) mit einem Austragrutscheneinlass, der mit der Schneidkammer (33) in Verbindung steht, und einem Austragrutschenauslass (35) aufweist, eine Abdeckung (21), die mindestens einen Teil der Antriebsordnung abdeckt, und einen drehbaren Ablenkschutz (20), der in eine geschlossene Konfiguration gegen den Austragrutschenauslass (35) vorgespannt ist und wobei die Austragrutsche (34) einen Rutschenboden (37), Rutschenseiten (36) und ein Rutschendach (38) umfasst, **dadurch gekennzeichnet, dass** mindestens ein Teil des Rutschendaches (38) durch einen Abschnitt der Antriebsabdeckung (21) gebildet wird.

2. Schneidapparat für Vegetation nach Anspruch 1, **dadurch gekennzeichnet, dass** die Antriebsabdeckung (21) ein Spritzgussteil aus einem Kunststoffmaterial ist.

3. Schneidapparat für Vegetation nach Anspruch 2, **dadurch gekennzeichnet, dass** die Abdeckung ein erstes und ein zweites Abdeckelement (41, 42) umfasst.

4. Schneidapparat für Vegetation nach Anspruch 3, **dadurch gekennzeichnet, dass** das erste und das zweite Abdeckelement (41, 42) als einheitliche Komponente mit einem dazwischen gebildeten Drehgelenk (43) geformt sind.

5. Schneidapparat für Vegetation nach Anspruch 4, **dadurch gekennzeichnet, dass** eine obere Fläche des zweiten Abdeckelements (42) den Teil des Daches (38) der Austragrutsche (34) bildet, der von der Antriebsabdeckung (21) gebildet wird.

6. Schneidapparat für Vegetation nach Anspruch 5, **dadurch gekennzeichnet, dass** die unteren Flächen des ersten und des zweiten Abdeckelements (41, 42) entsprechende Rückhaltemittel (45, 46) aufweisen, so dass bei Biegen des Drehgelenks (43) das zweite Abdeckelement (42) in einem Abschnitt der unteren Fläche des ersten Abdeckelements (41) zurückgehalten wird.

7. Schneidapparat für Vegetation nach einem der vorhergehenden Ansprüche 1 bis 6, **dadurch gekennzeichnet, dass** die Abdeckung (21) Mittel zur Rückhaltung des Ablenkschutzes aufweist.

8. Schneidapparat für Vegetation nach Anspruch 7, **dadurch gekennzeichnet, dass** der Ablenkschutz (20) ein Ablenkschutzschild, das Drehmittel aufweist, die mit den Mitteln zur Rückhaltung des Ablenkschutzes zusammen wirken, umfasst.

9. Schneidapparat für Vegetation nach Anspruch 8, **dadurch gekennzeichnet, dass** das Drehmittel ein Paar sich nach außen erstreckender Stifte (50) umfasst, die angepasst sind, einzugreifen und durch entsprechende in der Abdeckung gebildete Fassungen (51) zurückgehalten zu werden.

10. Schneidapparat für Vegetation nach Anspruch 9, **dadurch gekennzeichnet, dass** die Fassungen jeweils durch entsprechende in den unteren Flächen des ersten und des zweiten Abdeckelements gebildeten Halbfassungen gebildet sind.

11. Schneidapparat für Vegetation nach einem der vorhergehenden Ansprüche in Form eines Rasenmähers.

12. Schneidapparat für Vegetation nach einem der vorhergehenden Ansprüche, wobei der Antrieb ein Elektromotor ist.

13. Verfahren zur Herstellung eines Schneidapparates für Vegetation, der eine Plattform (11) aufweist, die eine Schneidkammer (33) definiert und ein in der Schneidkammer (33) angebrachtes Schneidelement, eine Antriebsanordnung, die das Schneidelement antreibt, aufweist, und wobei der Antrieb auf einer oberen Fläche der Plattform (11) angebracht ist, wobei der Schneidapparat für Vegetation außerdem eine Austragrutsche (34) mit einem Austragrutscheneinlass, der mit der Schneidkammer (33) in Verbindung steht, und einem Austragrutschenauslass (35) umfasst, eine Abdeckung (21), die mindestens einen Teil der Antriebsanordnung abdeckt, sowie einen drehbaren Ablenkschutz (20), der in eine geschlossene Konfiguration gegen den Austragrutschenauslass (35) vorgespannt ist und wobei die Austragrutsche (34) einen Rutschenboden (37), Rutschenseiten (36) und ein Rutschendach (38) umfasst, wobei das Verfahren folgende Schritte umfasst:
i) Formen der Plattform (11) in einer Gussform mit einer einfachen Öffnung, so dass sich das Rutschendach (38) nur bis zum Anfang des Rutschenbodens (37) erstreckt, und
ii) Formen mindestens eines Abschnitts des Rutschendaches (38) durch einen Abschnitt der Antriebsabdeckung (21).

14. Verfahren nach Anspruch 13, **dadurch gekennzeichnet, dass** die Antriebsabdeckung (21) aus dem ersten und dem zweiten Abdeckelement (41, 42) gebildet wird.

15. Verfahren nach Anspruch 14, **dadurch gekennzeichnet, dass** das erste und das zweite Abdeckelement (41, 42) als einheitliche Komponente mit einem dazwischen gebildeten Drehgelenk (43) geformt sind.

## Revendications

1. Appareil de coupe de végétation ayant un plateau (11) ayant une surface inférieure définissant une chambre de coupe (33), un élément de coupe monté à l'intérieur de la chambre de coupe (33), un ensemble de moteur d'entraînement qui entraîne l'élément de coupe, le moteur d'entraînement étant monté sur une surface supérieure du plateau (11), l'appareil de coupe de végétation comportant en outre une goulotte d'évacuation (34) ayant une entrée de goulotte d'évacuation en communication avec la chambre de coupe (33) et une sortie de goulotte d'évacuation (35), un capot (21) recouvrant au moins une partie de l'ensemble de moteur d'entraînement, et un déflecteur pivotant (20) rappelé dans une configuration fermée contre la sortie de goulotte d'évacuation (35), la goulotte d'évacuation (34) comportant un fond de goulotte (37), des côtés de goulotte (36) et un plafond de goulotte (38) ; **caractérisé en ce qu'**une partie du plafond de goulotte (38) est formée par une partie du capot de moteur d'entraînement (21).

2. Appareil pour végétation selon la revendication 1, dans lequel le capot de moteur d'entraînement (21) est moulé par injection d'une matière plastique.

3. Appareil pour végétation selon la revendication 2, dans lequel le capot comprend des premier et deuxième éléments de capot (41, 42).

4. Appareil pour végétation selon la revendication 3, dans lequel les premier et deuxième éléments de capot (41, 42) sont moulés sous la forme d'un composant unitaire avec une charnière de matière (43) formée entre eux.

5. Appareil pour végétation selon la revendication 4, dans lequel une surface supérieure du deuxième élément de capot (42) forme la partie du plafond (38) de la goulotte d'évacuation (34) formée par le capot de moteur d'entraînement (21).

6. Appareil pour végétation selon la revendication 5, dans lequel des surfaces inférieures des premier et deuxième éléments de capot (41, 42) comprennent des moyens de retenue respectifs (45, 46) de telle sorte que, lors d'une flexion de la charnière de matière (43), le deuxième élément de capot (42) est retenu à l'intérieur d'une partie d'une surface inférieure du premier élément de capot (41).

7. Appareil pour végétation selon l'une quelconque des revendications 1 à 6, dans lequel le capot (21) comprend des moyens de retenue de déflecteur.

8. Appareil pour végétation selon la revendication 7, dans lequel le déflecteur (20) comprend un panneau de déflecteur comprenant des moyens de pivot pouvant coopérer avec lesdits moyens de retenue de déflecteur.

9. Appareil pour végétation selon la revendication 8, dans lequel les moyens de pivot comprennent une paire d'axes s'étendant vers l'extérieur (50) prévus pour engager et être retenus par des supports correspondants (51) formés dans le capot.

10. Appareil pour végétation selon la revendication 9, dans lequel les supports sont formés chacun par des demi-supports respectifs formés dans les surfaces inférieures des premier et deuxième éléments de capot.

11. Appareil pour végétation selon l'une quelconque des revendications précédentes sous la forme d'une tondeuse à gazon.

12. Appareil pour végétation selon l'une quelconque des revendications précédentes dans lequel le moteur d'entraînement est un moteur électrique.

13. Procédé de fabrication d'un dispositif de coupe de végétation ayant un plateau (11) définissant une chambre de coupe (33) et ayant un élément de coupe monté à l'intérieur de la chambre de coupe (33), un ensemble de moteur d'entraînement qui entraîne l'élément de coupe, le moteur d'entraînement étant monté sur une surface supérieure du plateau (11), l'appareil de coupe de végétation comportant en outre une goulotte d'évacuation (34) ayant une entrée de goulotte d'évacuation en communication avec la chambre de coupe (33) et une sortie de goulotte d'évacuation (35), un capot (21) recouvrant au moins une partie de l'ensemble de moteur d'entraînement, et un déflecteur pivotant (20) rappelé dans une configuration fermée contre la sortie de goulotte d'évacuation (35), la goulotte d'évacuation (34) comportant un fond de goulotte (37), des côtés de goulotte (36) et un plafond de goulotte (38) ; ledit procédé comportant les étapes consistant à :
i) mouler le plateau (11) avec un moule à ouverture simple, de telle sorte que le plafond de goulotte (38) s'étend seulement aussi loin que le début du fond de goulotte (37) ; et
ii) former au moins une partie du plafond de goulotte (38) par une partie du capot de moteur d'entraînement (21).

14. Procédé selon la revendication 13, selon lequel le capot de moteur d'entraînement (21) est formé à partir de premier et deuxième éléments de capot (41, 42).

15. Procédé selon la revendication 14, selon lequel les premier et deuxième éléments de capot (41, 42) sont moulés sous la forme d'un composant unitaire avec une charnière de matière (43) formée entre eux.
